## Europäisches Patentamt

## European Patent Office

## Office européen des brevets

(19)

(11) Veröffentlichungsnummer: **0 082 941**
**B1**

(12) **EUROPÄISCHE PATENTSCHRIFT**

(45) Veröffentlichungstag der Patentschrift:
25.09.85

(51) Int. Cl.⁴: **A 23 K 1/175**

(21) Anmeldenummer: **82110277.9**

(22) Anmeldetag: **08.11.82**

(54) **Organo-Mineral-Futterphosphate und Verfahren zu ihrer Herstellung.**

(30) Priorität: **26.11.81 DE 3146857**

(43) Veröffentlichungstag der Anmeldung:
**06.07.83 Patentblatt 83/27**

(45) Bekanntmachung des Hinweises auf die Patenterteilung:
**25.09.85 Patentblatt 85/39**

(84) Benannte Vertragsstaaten:
**AT BE CH DE FR GB IT LI LU NL SE**

(56) Entgegenhaltungen:
**EP - A - 0 024 509**
**DE - A - 2 822 279**
**DE - B - 1 206 293**
**FR - A - 2 375 833**

(73) Patentinhaber: **HOECHST AKTIENGESELLSCHAFT,**
**Postfach 80 03 20, D-6230 Frankfurt am Main 80 (DE)**

(72) Erfinder: **Cremer, Josef, Dr., Karl-Schurz-Strasse 6,**
**D-5030 Hürth (DE)**
Erfinder: **Holz, Josef, Breitestrasse 20,**
**D-4048 Grevenbroich (DE)**
Erfinder: **Bährecke, Gerd, Dr., Eppsteinerstrasse 14,**
**D-6234 Hattersheim (DE)**

## Beschreibung

Die vorliegende Erfindung betrifft Organo-Mineral-Futterphosphate sowie Verfahren zu ihrer Herstellung.

Bekannt sind Organo-Futtermittel, welche durch Aufsprühen von verdünnter Phosphorsäure auf beispielsweise Maisstärke und Trocknen des Zwischenproduktes bei niedrigeren Temperaturen erhältlich sind.

In der praktischen Nutztier-Ernährung werden die erforderlichen Elemente Calcium, Phosphor, Natrium und Magnesium in zunehmendem Masse in Form der Verbindungen Calciumdihydrogenphosphat und Calciummonohydrogenphosphat sowie als Kombinationssysteme Natrium-Calciumphosphat und Natrium-Calcium-Magnesium-Phosphat zugefüttert, wobei die Phosphate nur citratlöslich sind. Solche Beifuttermischungen sind beispielsweise aus der DE-B-1 206 293 und der DE-B-1 301 705 bekannt.

Die Futterzusätze für Tiere gemäss der FR-A-2 375 833 können als pulverförmige mineralische Zusatzstoffe Phosphate, Oxide, Hydroxide, Chloride, Sulfate und Carbonate von Calcium, Magnesium und Natrium sowie Phosphate, Chloride, Sulfate und Carbonate des Ammoniums enthalten. Dabei können die pulverförmigen mineralischen Zusatzstoffe eine bedeutende Menge von Nährstoffflüssigkeiten adsorbieren. Über die Löslichkeit der mineralischen Zusatzstoffe werden keine Angaben gemacht.

Aus der EP-A-24 509 ist ein mineralisches Mischfuttermittel bekannt, welches aus einer pulverförmigen Mischung saurer Phosphate des Natriums, Magnesiums und Calciums, aus Viehsalz, Futterkalk, Kleie, Spurenelementen, Vitaminen und verdünnter Phosphorsäure in einem Mischer herstellbar ist. Die Löslichkeit des Mischfuttermittels ist nicht angegeben.

Schliesslich besteht das methanollösliche Nichtprotein-Stickstofffuttermittel nach der DE-A-2 822 279 aus einer Mischung von Harnstoffphosphat und entfluoriertem Rohphosphat in einem Gewichtsverhältnis von 1 : 10 bis 10 : 1. Dabei kann das Futtermittel neben Vitaminen auch noch zusätzlich Calciumsulfat, Tricalciumphosphat, Magnesiumoxid, Magnesiumphosphat, Bentonit, Natriumchlorid, Melasse und/oder Mehl enthalten.

Allgemein ist für die Resorption von Mineralstoffen im Verdauungstrakt das Vorhandensein von Säuren und eiweisshaltigen Komponenten bedeutungsvoll. Darüber hinaus ist es jedoch für die biologische Verwertbarkeit der anorganischen Elemente entscheidend, dass die Mineralstoffe mindestens magensäurelöslich, besser noch in möglichst weitgehend wasserlöslicher Form vorliegen. Die Wasserlöslichkeit des funktionell besonders wirksamen Elementes Phosphor ist für einige Handelsprodukte wie folgt:

| Handelsprodukt | % Ca | % Mg | % Na | % P | % P wasserlöslich |
|---|---|---|---|---|---|
| Monocalciumphosphat I | 17,1 | — | — | 22,6 | ~70 |
| Monocalciumphosphat II | 16,6 | — | — | 21,9 | ~73 |
| Dicalciumphosphatdihydrat | 24,0 | — | — | 17,5 | < 3 |
| Na-Ca-Phosphat I | 30,0 | — | 6,5 | 18,4 | < 1 |
| Na-Ca-Phosphat II | 13,0 | — | 7,5 | 20,0 | ~40 |
| Na-Ca-Mg-Phosphat | 9,3 | 5,5 | 11,0 | 17,5 | ~63 |

Daraus ergibt sich, dass mit abnehmendem Calcium-Gehalt im Produkt die Wasserlöslichkeit des Phosphors von praktisch unlöslich bis auf etwa 73% ansteigt, wobei das Ca:P-Verhältnis zwischen 0,65 und 1,63 (dabei ist bei Natrium-Calcium-Magnesium-Phosphat der Magnesiumanteil auf Calcium umgerechnet und dem Calciumanteil zugeschlagen worden) beträgt. Darüber hinaus ist natürlich bei Anwendung von Natriumphosphaten oder verdünnter Phosphorsäure eine praktisch 100%ige Wasserlöslichkeit erreichbar. Jedoch ergeben sich bei Verwendung von Natriumphosphaten für deren Herstellung mittels Natronlauge oder Soda höhere Kosten als beim Einsatz von Steinsalz als Natriumquelle im Mineralfuttermittel, während bei der Anwendung von verdünnter Phosphorsäure durch die hohe Acidität der freien Säure beträchtliche Handhabungs- und Korrosionsprobleme sowie in Verbindung mit organischen Komponenten Produktionsstabilitäten, beispielsweise Verbackungen beim Lagern, auftreten.

Es ist Aufgabe der vorliegenden Erfindung, Futterphosphate bereitzustellen sowie Verfahren zu ihrer Herstellung anzugeben, welche den Resorptionsvorteil einer möglichst hohen Wasserlöslichkeit des in ihnen enthaltenen Phosphors aufweisen und welche in freifliessender Form anfallen sowie auch beim Lagern nicht verbacken. Das wird erfindungsgemäss dadurch erreicht, dass die Futterphosphate 15 bis 75 Gewichts% einer organischer Komponente, 6 bis 20 Gewichts% Phosphor, 3,5 bis 13 Gewichts% Calcium und 0 bis 6 Gewichts% Magnesium enthalten, einen wasserlöslichen Phosphoranteil von mehr als 80% sowie einen pH-Wert von 2,7 bis 7 aufweisen, wobei die organische Komponente aus Tapioka, Weizengriesskleie, Rübentrockenschnitzel oder ihren Mischungen besteht und wobei Calcium und Magnesium als Phosphate vorliegen. Diese Organo-Mineral-Futterphosphate können weiterhin wahlweise auch noch dadurch gekennzeichnet sein, dass

a) der Gehalt an

organischer Komponente 27 bis 57 Gewichts%,
Phosphor 9 bis 17 Gewichts%,
Calcium 4,5 bis 10,5 Gewichts%,
Magnesium 0 bis 3,5 Gewichts%
beträgt;
b) das Gewichtsverhältnis von (Ca + Mg) : P 0,5 bis 1,3, vorzugsweise 0,6 bis 1,0, beträgt.

Ein Verfahren zur Herstellung der Organo-Mineral-Futterphosphate kann dadurch gekennzeichnet sein, dass man zur Gewinnung eines praktisch staubfreien Produktes, vorzugsweise von Granalien mit einer Körnung von 0,3 bis 3 mm, konzentrierte Nassphosphorsäure mit organischen Mehlen sowie feingemahlenen Calcium- und gegebenenfalls Magnesiumverbindungen bei Temperaturen von 20 bis 100° C in schnelllaufenden Mischvorrichtungen umsetzt und dass man anschliessend durch Trocknen bei 50 bis 160° C den Wassergehalt des Produktes so einstellt, dass er sich mit 60 bis 80% relativer Luftfeuchte im Gleichgewicht befindet.

Ein anderes Verfahren zur Herstellung der Organo-Mineral-Futterphosphate kann dadurch gekennzeichnet sein, dass man zur Gewinnung eines geformten Produktes, vorzugsweise von strangförmigen Granalien von ca. 4 bis 10 mm Länge, konzentrierte Nassphosphorsäure mit organischen Mehlen sowie feingemahlenen Calcium- und gegegenenfalls Magnesiumverbindungen bei Temperaturen von 60 bis 100° C in langsamdrehenden, kneterartigen Reaktoren umsetzt und dass man das dabei anfallende, plastische Konsistenz aufweisende Material heiss verpresst und abkühlen lässt.

Die genannten Verfahren können weiterhin wahlweise auch noch dadurch ausgestaltet sein, dass
c) die Nassphosphorsäure einen $P_2O_5$-Gehalt von 40 bis 60 Gewichts% aufweist;
d) die organischen Mehle durch Mahlen von Tapioka, Weizengriesskleie, Rübentrockenschnitzel oder deren Mischungen erhalten werden;
e) die Magnesium- und/oder Calciumverbindungen Carbonate, Oxide oder deren Mischungen sind.

Die Organo-Mineral-Futterphosphate gemäss der Erfindung weisen einen wasserlöslichen Phosphoranteil von mehr als 80% auf, während ihr pH-Wert 2,7 bis 7, vorzugsweise 3,0 bis 4,5, beträgt.

Bei der Herstellung der erfindungsgemässen Organo-Mineral-Futterphosphate erfolgt durch die partiell hohe Acidität während der Reaktion ein Teilaufschluss der die organische Komponente bildenden Cellulosen und Stärken zu niedriger kondensierten Sacchariden, wodurch günstige Voraussetzungen für einen optimalen Stoffwechselablauf geschaffen werden.

Bei der Herstellung der Organo-Mineral-Futterphosphate erfolgt die Umsetzung der organischen Komponente sowie der Calcium- und Magnesiumverbindungen mit der Nassphosphorsäure in schnelllaufenden Mischvorrichtungen beim Einsatz von Carbonaten des Calciums und Magnesiums bei 20 bis 40° C, während beim Einsatz von Oxiden des Calciums oder Magnesiums die Umsetzungstemperatur wegen der freiwerdenden Neutralisationswärme bis 100° C beträgt.

Im Rahmen der vorliegenden Erfindung wird mit Nassphosphorsäure eine Phosphorsäure bezeichnet, welche durch Aufschluss von Rohphosphaten mit Mineralsäuren und Abtrennen des dabei gebildeten Calciumsalzes gewonnen wurde.

In den folgenden Beispielen wurde der Anteil des wasserlöslichen Phosphors wie folgt bestimmt: 1 g der auf eine Körnung von weniger als 0,5 mm zerkleinerten Probe wird in einem 100-ml-Becherglas mit etwa 25 ml Wasser übergossen und die Suspension etwa 10 Minuten gerührt. Nach dem Absitzen des Feststoffes wird die überstehende Lösung abdekantiert und in einen 250-ml-Messkolben abfiltriert. Der Rückstand im Becherglas wird noch zweimal in gleicher Weise mit Wasser extrahiert und die überstehende Lösung in den Messkolben abfiltriert. Der Filterrückstand wird mit Wasser gewaschen, bis sich ca. 200 ml Flüssigkeit im Messkolben befinden. Nach Zufügen einiger Tropfen Salpetersäure zu der Flüssigkeit wird der Messkolben mit Wasser aufgefüllt.

Die $P_2O_5$-Bestimmung erfolgt in aliquoten Teilen der Flüssigkeit nach der Verbandsmethode der Landwirtschaftlichen Untersuchungs- und Forschungsanstalt (vergl. Methodenbuch, Band III, 1976).

*Beispiel 1*

In eine schnelllaufende Doppelpaddelschnecke wurden zu einem Gemisch von 60 Gew.-Teilen Tapiokamehl und 34 Gew.-Teilen Kalksteinmehl 100 Gew.-Teile Nassphosphorsäure mit einem $P_2O_5$-Gehalt von 49 Gewichts% dosiert. Die Reaktionstemperatur betrug etwa 40° C. Es bildeten sich 185 Gew.-Teile granuliertes Produkt mit einer Körnung von 0,3 bis 3 mm, woraus nach Trocknen bei 60° C 160 Gew.-Teile Endprodukt resultierten.
Zusammensetzung:
Phosphor-Gehalt: 12,8 Gewichts%
davon wasserlöslich: 12,3 Gewichts%
Calcium-Gehalt: 7,7 Gewichts%
Ca:P-Verhältnis: 0,6
$CO_2$-Gehalt: 0,2 Gewichts%
pH-Wert: 3,2
96% des Gesamtphosphors sind wasserlöslich

*Beispiel 2*

Beispiel 1 wurde wiederholt, wobei jedoch anstelle des Tapiokamehles 60 Gew.-Teile Rübentrockenschnitzelmehl eingesetzt wurden. Es wurden 180 Gew.-Teile granuliertes Produkt mit einer Korngrösse von 0,3 bis 3,5 mm gebildet, woraus nach Trocknen bei 80° C 158 Gew.-Teile Endprodukt resultierten.
Zusammensetzung:
Phosphor-Gehalt: 13,0 Gewichts%
davon wasserlöslich: 12,3 Gewichts%
Calcium-Gehalt: 7,9 Gewichts%
Ca:P-Verhältnis: 0,61
$CO_2$-Gehalt: 0,3 Gewichts%
pH-Wert: 3,5

95% des Gesamtphosphors sind wasserlöslich.

*Beispiel 3*

100 Gew.-Teile Nassphosphorsäure (46% $P_2O_5$) wurden mit einem Gemisch aus 56 Gew.-Teilen Tapiokamehl und 32 Gew.-Teilen Kalksteinmehl in einen langsam laufenden Doppelwellen-Trogkneter bei ca. 80°C zur Reaktion gebracht. Dabei entstanden 170 Gew.-Teile eines plastisch verformbaren Materials, welches heiss zu etwa 5 bis 8 mm langen Granalien verpresst wurde. Nach dem Erkalten lagen 163 Gew.-Teile Granalien vor.
Zusammensetzung:
    Phosphor-Gehalt: 12,0 Gewichts%
    davon wasserlöslich: 11,5 Gewichts%
    Calcium-Gehalt: 7,2 Gewichts%
    Ca:P-Verhältnis: 0,6
    $CO_2$-Gehalt: 0,25 Gewichts%
    pH-Wert: 3,4
    96% des Gesamtphosphors sind wasserlöslich.

*Beispiel 4*

Beispiel 3 wurde wiederholt, wobei jedoch anstelle des Tapiokamehles 56 Gew.-Teile Weizengrieskleienmehl eingesetzt wurden. Dabei entstanden 175 Gew.-Teile eines plastisch verformbaren Materials, welches heiss zu etwa 4 bis 8 mm langen Granalien verpresst wurde. Nach dem Erkalten lagen 165 Gew.-Teile Granalien vor.
Zusammensetzung:
    Phosphor-Gehalt: 11,8 Gewichts%
    davon wasserlöslich: 11,2 Gewichts%
    Calcium-Gehalt: 7,2 Gewichts%
    Ca:P-Verhältnis: 0,61
    $CO_2$-Gehalt: 0,4 Gewichts%
    pH-Wert: 3,2
    95% des Gesamtphosphors sind wasserlöslich.

*Beispiel 5*

100 Gew.-Teile Nassphosphorsäure (49% $P_2O_5$) wurden in einer schnellaufenden Doppelpaddelschnecke mit 35 Gew.-Teilen Tapiokamehl und 34 Gew.-Teilen Kalksteinmehl in jeweils äquivalenten Portionen bei 30 bis 40°C umgesetzt. Dabei wurden 158 Gew.-Teile granuliertes Produkt mit einer Körnung von 0,3 bis 3 mm gebildet, woraus nach Trocknen bei 100°C 132 Gew.-Teile Endprodukt resultierten.
Zusammensetzung:
    Phosphor-Gehalt: 16,2 Gewichts%
    davon wasserlöslich: 15,6 Gewichts%
    Calcium-Gehalt: 10,5 Gewichts%
    Ca:P-Verhältnis: 0,65
    $CO_2$-Gehalt: 0,5 Gewichts%
    pH-Wert: 3,5
    96% des Gesamtphosphors sind wasserlöslich.

*Beispiel 6*

Beispiel 5 wurde wiederholt, wobei jedoch 130 Gew.-Teile Tapiokamehl angewendet wurden. Es wurden 260 Gew.-Teile granuliertes Produkt mit einer Korngrösse von 0,3 bis 3 mm gebildet, woraus nach Trocknen bei 120°C 230 Gew.-Teile Endprodukt resultierten.

Zusammensetzung:
    Phosphor-Gehalt: 9,3 Gewichts%
    davon wasserlöslich: 9,1 Gewichts%
    Calcium-Gehalt: 6,2 Gewichts%
    Ca:P-Verhältnis: 0,67
    $CO_2$-Gehalt: 0,4 Gewichts%
    pH-Wert: 3,0
    98% des Gesamtphosphors sind wasserlöslich.

*Beispiel 7*

100 Gew.-Teile Nassphosphorsäure (52% $P_2O_5$) wurden in einer schnellaufenden Doppelpaddelschnecke mit einem Gemisch aus 64 Gew.-Teilen Tapiokamehl und 18 Gew.-Teilen Kalksteinmehl bei 30 bis 40°C umgesetzt. Nach Zusatz von 10 Gew.-Teilen von gebranntem Kalkmehl wurden 190 Gew.-Teile granuliertes Produkt mit einer Körnung von 0,3 bis 3 mm gebildet, woraus nach Trocknen bei 150°C 173 Gew.-Teile Endprodukt resultierten.
Zusammensetzung:
    Phosphor-Gehalt: 13,1 Gewichts%
    davon wasserlöslich: 12,7 Gewichts%
    Calciumgehalt: 7,8 Gewichts%
    Ca:P-Verhältnis: 0,6
    $CO_2$-Gehalt: 0,22 Gewichts%
    pH-Wert: 3,6
    97% des Gesamtphosphors sind wasserlöslich.

*Beispiel 8*

100 Gew.-Teile Nassphosphorsäure (50% $P_2O_5$) wurden in einer schnellaufenden Doppelpaddelschnecke mit einem Gemisch aus 61 Gew.-Teilen Tapiokamehl und 33 Gew.-Teilen Dolomitmehl bei 30 bis 40°C umgesetzt. Dabei wurden 178 Gew.-Teile granuliertes Produkt mit einer Körnung von 0,3 bis 3 mm gebildet, woraus nach Trocknen bei 80°C 161 Gew.-Teile Endprodukt resultierten.
Zusammensetzung:
    Phosphors-Gehalt: 13,4 Gewichts%
    davon wasserlöslich: 12,7 Gewichts%
    Calcium-Gehalt: 4,4 Gewichts%
    Magnesium-Gehalt: 2,6 Gewichts%
    Ca:P-Verhältnis: 0,65 (Mg auf Ca umgerechnet)
    $CO_2$-Gehalt: 0,7 Gewichts%
    pH-Wert: 3,5
    95% des Gesamtphosphors sind wasserlöslich.

*Beispiel 9*

100 Gew.-Teile Nassphosphorsäure (49% $P_2O_5$) wurden in einer schnellaufenden Doppelpaddelschnecke mit 100 Gew.-Teilen Tapiokamehl und 31 Gew.-Teilen gebranntem Dolomitmehl (53,3% CaO, 37,7% MgO, Rest $CO_2$, $SiO_2$, $Fe_2O_3$) in jeweils äquivalenten Mengen bei 80 bis 100°C umgesetzt. Dabei wurden 225 Gew.-Teile granuliertes Produkt mit einer Korngrösse von 0,3 bis 3 mm gebildet, woraus nach Trocknen bei 120°C 210 Gew.-Teile Endprodukt resultierten.
Zusammensetzung:
    Phosphor-Gehalt: 10,2 Gewichts%
    davon wasserlöslich: 8,5 Gewichts%
    Calcium-Gehalt: 5,0 Gewichts%

Magnesium-Gehalt: 3,1 Gewichts%
Ca:P-Verhältnis: 1,0 (Mg auf Ca umgerechnet)
$CO_2$-Gehalt: 0,1 Gewichts%
pH-Wert: 4,5
83% des Gesamtphosphors sind wasserlöslich.

*Beispiel 10*

100 Gew.-Teile Nassphosphorsäure (50% $P_2O_5$) wurden in einer schnellaufenden Doppelpaddelschnecke mit einem Gemisch von 34 Gew.-Teilen gebranntem Dolomitmehl (vergl. Beispiel 9), 50 Gew.-Teilen Tapiokamehl und 50 Gew.-Teilen Weizengrieskleienmehl in jeweils äquivalenten Mengen bei 80 bis 100° C umgesetzt. Dabei wurden 232 Gew.-Teile granuliertes Produkt mit einer Korngrösse von 0,3 bis 3 mm gebildet, woraus beim Trocknen bei 100° C 216 Gew.-Teile Endprodukt resultierten.
Zusammensetzung:
Phosphor-Gehalt: 10,1 Gewichts%
davon wasserlöslich: 8,5 Gewichts%
Calcium-Gehalt: 6,0 Gewichts%
Magnesium-Gehalt: 3,6 Gewichts%
Ca:P-Verhältnis: 1,19 (Mg auf Ca umgerechnet)
$CO_2$-Gehalt: 0,1 Gewichts%
pH-Wert: 4,8
81% des Gesamtphosphors sind wasserlöslich.

## Patentansprüche

1. Organo-Mineral-Futterphosphate mit einem Gehalt von
15 bis 75 Gewichts% organischer Komponente,
6 bis 20 Gewichts% Phosphor,
3,5 bis 13 Gewichts% Calcium und
0 bis 6 Gewichts% Magnesium,
einem wasserlöslichen Phosphoranteil von mehr als 80% und einem pH-Wert von 2,7 bis 7, wobei die organische Komponente aus Tapioka, Weizengriesskleie, Rübentrockenschnitzel oder ihren Mischungen besteht und wobei Calcium und Magnesium als Phosphate vorliegen.

2. Organo-Mineral-Futterphosphate nach Anspruch 1, dadurch gekennzeichnet, dass der Gehalt an
organischer Komponente 27 bis 57 Gewichts%,
Phosphor 9 bis 17 Gewichts%,
Calcium 4,5 bis 10,5 Gewichts%,
Magnesium 0 bis 3,5 Gewichts%
beträgt.

3. Organo-Mineral-Futterphosphate nach Anspruch 1 oder 2, dadurch gekennzeichnet, dass das Gewichtsverhältnis von (Ca + Mg) : P 0,5 bis 1,3, vorzugsweise 0,6 bis 1,0, beträgt.

4. Verfahren zur Herstellung der Organo-Mineral-Phosphate nach einem der Ansprüche 1 bis 3, dadurch gekennzeichnet, dass man zur Gewinnung eines praktisch staubfreien Produktes, vorzugsweise von Granalien mit einer Körnung von 0,3 bis 3 mm, konzentrierte Nassphosphorsäure mit organischen Mehlen sowie feingemahlenen Calcium- und gegebenenfalls Magnesiumverbindungen bei Temperaturen von 20 bis 100° C in schnellaufenden Mischvorrichtungen umsetzt und dass man anschliessend durch Trocknen bei 50 bis 160° C den Wassergehalt des Produktes so einstellt, dass er sich mit 60 bis 80% relativer Luftfeuchte im Gleichgewicht befindet.

5. Verfahren zur Herstellung der Organo-Mineral-Phosphate nach einem der Ansprüche 1 bis 3, dadurch gekennzeichnet, dass man zur Gewinnung eines geformten Produktes, vorzugsweise von strangförmigen Granalien von ca. 4 bis 10 mm Länge, konzentrierte Nassphosphorsäure mit organischen Mehlen sowie feingemahlenen Calcium- und gegebenenfalls Magnesiumverbindungen bei Temperaturen von 60 bis 100° C in langsamdrehenden, kneterartigen Reaktoren umsetzt und dass man das dabei anfallende, plastische Konsistenz aufweisende Material heiss verpresst und abkühlen lässt.

6. Verfahren nach Anspruch 4 oder 5, dadurch gekennzeichnet, dass die Nassphosphorsäure einen $P_2O_5$-Gehalt von 40 bis 60 Gewichts% aufweist.

7. Verfahren nach einem der Ansprüche 4 bis 6, dadurch gekennzeichnet, dass die organischen Mehle durch Mahlen von Tapioka, Weizengriesskleie, Rübentrockenschnitzel oder deren Mischungen erhalten werden.

8. Verfahren nach einem der Ansprüche 4 bis 7, dadurch gekennzeichnet, dass die Magnesium- und/oder Calciumverbindungen Carbonate, Oxide oder deren Mischungen sind.

## Revendications

1. Phosphates de fourrage organominéraux, caractérisés en ce qu'ils contiennent
15-75% en poids de composant organique,
6-20% en poids de phosphore,
3,5-13% en poids de calcium, et
0-6% en poids de magnésium,
et présentant une fraction de phosphore hydrosoluble de plus de 80% et un pH de 2,7-7, le composant organique consistant en tapioca, son de semoule de froment, rognures sèches de betteraves ou leurs mélanges et le calcium et le magnésium étant présents sous forme de phosphates.

2. Phosphates de fourrage organominéraux selon la revendication 1, caractérisés en ce qu'ils contiennent
27-57% en poids de composant organique,
9-17% en poids de phosphore,
4,5-10,5% en poids de calcium, et
0-3,5% en poids de magnésium.

3. Phosphates de fourrage organominéraux selon la revendication 1 ou 2, caractérisés en ce que le rapport pondéral (Ca + Mg)/P est de 0,5 à 1,3, de préférence de 0,6 à 1.

4. Procédé de préparation de phosphates organominéraux selon l'une des revendications 1 à 3, caractérisé en ce que, pour obtenir un produit pratiquement exempt de poussière consistant, de préférence, en granulés d'une dimension de 0,3-3 mm, on fait réagir, à 20-100° C dans des mélangeurs tournant à grande vitesse, de l'acide phosphorique humide concentré avec des farines organiques et des composés de calcium et, éventuellement, de magnésium finement broyés et on établit ensuite dans le produit par séchage à 50-160°C une teneur en eau se trouvant en équilibre avec une humidité relative de l'air de 60-80%.

5. Procédé de préparation des phosphates organominéraux selon l'une des revendications 1 à 3, caractérisé en ce que, pour obtenir un produit façonné, de préférence des granulés en boudins d'une longueur d'environ 4-10 mm, on fait réagir à 60-100°C, dans des réacteurs de type mélangeur tournant à faible vitesse, de l'acide phosphorique humide concentré avec des farines organiques et des composés de calcium et, éventuellement, de magnésium finement broyés, et on comprime à chaud le produit obtenu de consistance plastique et on le laisse refroidir.

6. Procédé selon la revendication 4 ou 5, caractérisé en ce que l'acide phosphorique humide présente une teneur en $P_2O_5$ de 40-60% en poids.

7. Procédé selon l'une des revendications 4 à 6, caractérisé en ce que les farines organiques sont obtenues par broyage de tapioca, de son de semoule de froment, de rognures sèches de betteraves ou de leurs mélanges.

8. Procédé selon l'une des revendications 4 à 7, caractérisé en ce que les composés de calcium et/ou de magnésium sont des carbonates, des oxydes ou leurs mélanges.

## Claims

1. Organomineral animal feed phosphates containing
   15-75 wgt% organic component,
   6-20 wgt% phosphorus,
   3.5-13 wgt% calcium, and
   0-6 wgt% magnesium,
presenting a water-soluble phosphorus fraction of more than 80% and a pH-value of 2.7 to 7, the organic component consisting of tapioca, wheat bran, dry slices of beet roots or a mixture thereof, and the calcium and magnesium being present in phosphate form.

2. Organomineral animal feed phosphates as claimed in claim 1, containing
   27-57 wgt% organic component,
   9-17 wgt% phosphorus,
   4.5-10.5 wgt% calcium, and
   0-3.5 wgt% magnesium.

3. Organomineral feed phosphates as claimed in claim 1 or 2, wherein the ratio by weight of (Ca + Mg)/P is 0.5-1.3, preferably 0.6-1.

4. Process for making the organomineral feed phosphates as claimed in any of claims 1 to 3, wherein, in order to obtain a product practically free from dust consisting preferably of granules with a size of 0.3-3 mm, concentrated wet process phosphoric acid is reacted at 20-100°C in a high speed agitating means with organic flour and finely ground calcium and optionally magnesium compounds, and the product is dried at 150-160°C to establish a water content in equilibrium with a relative humidity of the air of 60-80%.

5. Process for making the organomineral animal feed phosphates as claimed in any of claims 1 to 3, wherein, in order to obtain a formed product, preferably strand-like granules with a length of about 4-10 mm, concentrated wet process phosphoric acid is reacted at 60-100°C in a low speed reactor of the type of a kneader with organic flour and finely ground calcium and optionally magnesium compounds, and the resulting product having a plastic consistency is compressed while hot and allowed to cool.

6. Process as claimed in claim 4 or 5, wherein the wet process phosphoric acid contains 40-60 wgt% $P_2O_5$.

7. Process as claimed in any of claims 4 to 6, wherein the organic flour is obtained by grinding tapioca, wheat bran, dry slices of beet roots or a mixture thereof.

8. Process as claimed in any of claims 4 to 7, wherein the magnesium and/or calcium compounds are carbonates, oxides or a mixture thereof.